# EUROPÄISCHE PATENTSCHRIFT

(11) **EP 4 384 424 B1**
(45) Veröffentlichungstag und Bekanntmachung des Hinweises auf die Patenterteilung: **04.06.2025**
(21) Anmeldenummer: 22761213.2
(22) Anmeldetag: 05.08.2022
(51) Int. Cl.: B60T 3/00, B60T 7/22, B65G 69/00

(54) **POSITIONIERUNGSVORRICHTUNG FÜR EINE TRANSPORTANORDNUNG UND TRANSPORTANORDNUNG**
POSITIONING DEVICE FOR A TRANSPORTATION ASSEMBLY AND TRANSPORTATION ASSEMBLY
DISPOSITIF DE POSITIONNEMENT D'UN ENSEMBLE DE TRANSPORT ET ENSEMBLE DE TRANSPORT

(30) Priorität: 13.08.2021 DE 102021208887
(43) Veröffentlichungstag der Anmeldung: 19.06.2024
(73) Patentinhaber: Robert Bosch GmbH, 70442 Stuttgart (DE)
(72) Erfinder: HOFELE, Jens, 73230 Kirchheim Unter Teck (DE)
(86) Internationale Anmeldenummer: PCT/EP2022/072122
(87) Internationale Veröffentlichungsnummer: WO 2023/016944

(56) Entgegenhaltungen:
- EP-A1- 2 589 519
- WO-A1-2013/136031
- DE-A1- 102011 005 478
- US-A- 2 858 905
- US-A1- 2003 159 892
- US-A1- 2004 216 965
- US-A1- 2009 194 376
- US-A1- 2011 240 416

## Beschreibung

### Stand der Technik

Es wird eine Positionierungsvorrichtung für eine Transportanordnung vorgeschlagen, wobei die Transportanordnung mindestens eine Schiene und eine Transporteinheit aufweist. Die Positionierungsvorrichtung sieht ein Grundmodul mit einem Positionierungsabschnitt und einem Schienenkopplungsabschnitt vor.

Fahrbare und/oder rollbare Transporteinheiten, beispielsweise Rollwägen, finden in unterschiedlichsten Bereichen ihren Einsatz. Im produzierenden und/oder verarbeitenden Umfeld werden beispielsweise Kleinladungsträgergebinde auf rollbaren Einheiten, sogenannten Bodenrollern, transportiert. Zur Führung solcher Transporteinheiten, insbesondere der Bodenroller, werden an relevanten Stellen, insbesondere Lagerstellen, Schienen auf dem Boden aufgebracht, die eine Positionierung und/oder Fixierung der Transporteinheiten erlauben. Beispielsweise werden als Schienen sogenannte Monorailschienen eingesetzt. Im Stand der Technik sind hierzu beispielsweise Positionierungseinheiten bekannt, die die Montage von Bürsten an den Schienen vorsehen, sodass die Bürsten die rollbaren Einheiten in diesem Bereich fixieren. Die verwendeten Bürsten weisen einen hohen Verschleiß auf.

Die Druckschrift DE 10 2011 005 478 A1 beschreibt eine Vorrichtung zum Fixieren mindestens einer fahrbaren Transportvorrichtung, die einen kanalartigen Eingangsbereich und einen sich daran anschließenden Arretierungsbereich aufweist, wobei am Ende des Arretierungbereichs ein Anschlag bzw. Abschluss vorgesehen ist.

Aus der US 2011 / 240 416 A1 ist ein Radrückhaltesystem zum Blockieren eines Rades an einer Laderampe bekannt.

### Offenbarung der Erfindung

Es wird eine Positionierungsvorrichtung für eine Transportanordnung mit den Merkmalen des Anspruchs 1 vorgeschlagen. Ferner wird eine Transportanordnung mit der Positionierungsvorrichtung vorgeschlagen. Bevorzugte und/oder vorteilhafte Ausführungen ergeben sich aus den Unteransprüchen, der Beschreibung und den beigefügten Figuren.

Es wird eine Positionierungsvorrichtung vorgeschlagen. Die Positionierungsvorrichtung ist insbesondere für eine Transportanordnung, insbesondere zur Verwendung und/oder Integration bzw. Ergänzung der Transportanordnung ausgebildet und/oder vorgesehen. Die Positionierungsvorrichtung kann insbesondere als eine Positionierungsbucht für die Transportanordnung bezeichnet werden. Insbesondere ist die Positionierungsvorrichtung zum "in Position halten" und/oder Fixierung eines Bestandteils, insbesondere der Transporteinheit, ausgebildet. Die Transportanordnung ist vorzugsweise ausgebildet und/oder eingerichtet für den Einsatz im fertigenden, produzierenden und/oder verarbeitenden Umfeld, beispielsweise in einer Fabrikation oder Montage. Beispielsweise ist die Transportanordnung zum Transport von Material, Werkzeug und/oder Werkstücken ausgebildet. Besonders bevorzugt bildet die Transportanordnung eine Anordnung für Bodenroller und/oder zur geführten Verbringung von Waren und/oder Gegenständen. Die Positionierungsvorrichtung ist im Speziellen eine modulare Positionierungsvorrichtung.

Die Transportanordnung umfasst mindestens eine Schiene und mindestens eine Transporteinheit. Die Schiene ist beispielsweise als eine Monorailschiene ausgebildet. Die Schiene ist ausgebildet zur Montage und/oder Befestigung an einem Boden, beispielsweise einem Fabrikboden. Die Schiene ist insbesondere ausgebildet, den Transportweg der Transporteinheit vorzugeben, zu führen und/oder festzulegen. Insbesondere sind mehrere Schienen, insbesondere parallele Schienen vorgesehen, wobei die Schienen ausgebildet sind, in Querrichtung beabstandete Räder oder Rollen aufzunehmen. Die Transporteinheit ist insbesondere rollbar und/oder fahrbar ausgebildet. Beispielsweise bildet die Transporteinheit einen Wagen, einen Bodenroller und/oder eine Einheit mit Rollen oder Rädern. Die Transporteinheit umfasst mindestens eine, vorzugsweise eine Mehrzahl, an Rollen, alternativ und/oder ergänzend umfasst die Transporteinheit mindestens ein oder mehrere Räder. Insbesondere werden im folgenden Rolle und Rad im Wesentlichen gleichbedeutend und/oder synonym verwendet. Besonders bevorzugt weist die Transporteinheit Radachsen, bzw. Rollenachsen auf. Die Radachsen sind insbesondere in eine Fahrtrichtung beabstandet. Die Fahrtrichtung ist vorzugsweise gleichgerichtet zu einer Längserstreckung, insbesondere Längserstreckung der Transporteinheit und/oder Längserstreckung der Schiene. Im Falle einer gebogenen Schiene wird als Längserstreckung die lokale Annäherung, beispielsweise Tangente an die Schiene verstanden. Die Schiene weist eine erste Führungsnut auf. Die Führungsnut ist ausgebildet, mindestens eine der Rollen und/oder mindestens ein Rad aufzunehmen und/oder zu führen. Die Führungsnut weißt insbesondere einen Führungsnutboden auf. Die Führungsnut umfasst insbesondere zwei Seitenwände, die zusammen mit dem Führungsnutboden die Nut ausbilden und/oder begrenzen. Zur Führung und/oder zur Verwendung der Transportanordnung bzw. der Transporteinheit sind die Rolle und/oder das Rad in der Führungsnut angeordnet, so dass die Trajektorie und/oder Abrollpfad durch die Führungsnut bzw. Schiene vorgegeben ist.

Die Positionierungsvorrichtung umfasst ein Grundmodul. Das Grundmodul ist insbesondere zu Montage, Verbindung und/oder Anordnung mit bzw. in der Schiene ausgebildet. Insbesondere ist das Grundmodul einstückig ausgebildet. Das Grundmodul umfasst einen Positionierungsabschnitt und einen Schienenkopplungsabschnitt. Im Speziellen kann als Positionierungsabschnitt konkave Ausnehmung des Grundmoduls verstanden werden, wobei der Schienenkopplungsabschnitt beispielsweise als die Außenseite bzw. konvexe Hülle des Grundmoduls verstanden werden kann. Der Schienenkopplungsabschnitt ist ausgebildet zum Einlegen in die erste Führungsnut. Der eingelegte Schienenkopplungsabschnitt wird von der ersten Führungsnut im eingelegten Zustand, formschlüssig gehalten, wobei formschlüssig bezüglich der Querrichtung verstanden wird. Besonders bevorzugt ist im eingelegten Zustand das Grundmodul in Längsrichtung bzw. Fahrtrichtung verschiebbar. Beispielsweise entspricht die Form und/oder Kontur des Schienenkopplungsabschnitts der Kontur und/oder Form der ersten Führungsnut.

Der Positionierungsabschnitt ist insbesondere zum Halten, Positionieren und/oder Fixieren des Rates und/oder der Rolle ausgebildet. Insbesondere ist der Positionierungsabschnitt ausgebildet das Rad und/oder die Rolle aufzunehmen, im Speziellen formschlüssig in Querrichtung und/oder Längsrichtung zu halten und/oder positionieren. Der Positionierungsabschnitt weist eine zweite Führungsnut auf. Ferner umfasst der Positionierungsabschnitt, im Speziellen die zweite Führungsnut, einen befahrbaren Bodenabschnitt. Befahrbar meint in dieser Hinsicht insbesondere befahrbar für das mindestens eine Rad und/oder die mindestens eine Rolle. Der Bodenabschnitt kann dabei durchgängig aus einem Material, beispielsweise dem Material des Grundmoduls ausgebildet sein, alternativ kann der Bodenabschnitt eine Materialausnehmung aufweisen, so dass der Bodenabschnitt durch eine darunterliegende Ebene, beispielsweise den Führungsnutboden ergänzt oder gebildet wird. Der Bodenabschnitt weist eine Senke zur Positionierung und/oder Fixierung der Transporteinheit, im Speziellen dem mindestens einen Rad und/oder der Rolle der Transporteinheit, auf. Die Senke ist beispielsweise als eine Vertiefung und/oder ein Tal ausgebildet, welches in Längsrichtung bzw. Fahrtrichtung durch zwei Erhöhungen bzw. Berge begrenzt ist. Insbesondere kann die Senke als eine Senke der potentiellen Energie verstanden werden. Die Senke ist beispielsweise parabelförmig, dreiecksförmig, kreisbogenförmig oder wie ein Potenzialtopf ausgebildet. Die Führungsnut ist in eine Längsrichtung, bzw. in Fahrtrichtung, durchgängig ausgebildet und/oder offen ausgebildet. Insbesondere wird hierunter verstanden, dass die Führungsnut bzw. das Grundmodul keinen Abschluss aufweist, so dass ein Hineinrollen und/oder Herausrollen der Transporteinheit beidseitig möglich ist.

Die vorgeschlagene Positionierungsvorrichtung erlaubt eine Positionierung der Transporteinheit in Längsrichtung und/oder in Querrichtung. Die Positionierungsvorrichtung erlaubt es, in ein bestehendes System einer Transportanordnung und/oder eine Schiene nachträglich Positionierungsorte einzufügen. Insbesondere ist die vorgeschlagene Positionierungsvorrichtung nach ihrer Verwendung aus der Transportanordnung reversibel und wiederverwendbar entfernbar. Durch die offene Gestaltung in Längsrichtung ist die Positionierungsvorrichtung bzw. das Grundmodul vielseitig einsetzbar, insbesondere für den Einsatz in unterschiedliche Fahrtrichtung einer Transporteinheit.

Eine Ausgestaltung sieht vor, dass das Grundmodul einen Eingangsbereich und einen Ausgangsbereich aufweist. Insbesondere sind Eingangsbereich und Ausgangsbereich gleichartig ausgebildet und/oder dienen vorzugsweise der begrifflichen Unterscheidung der beiden Enden. Eingangsbereich und Ausgangsbereich sind insbesondere in Längsrichtung beabstandet angeordnet und/oder bilden einen Endbereich des Grundmoduls. Im Speziellen sind der Eingangsbereich und der Ausgangsbereich in Längsrichtung beabstandet und/oder bilden die Enden des Positionierungsabschnitts des bzw. der zweiten Führungsnut. Insbesondere sind Eingangsbereich und Ausgangsbereich Teil des Positionierungsabschnitts und/oder der zweiten Führungsnut. Zwischen dem Eingangsbereich und dem Ausgangsbereich ist ein Talbereich angeordnet. Der Talbereich ist insbesondere ebenso Teil der zweiten Führungsnut. Insbesondere umfassen der Eingangsbereich, der Ausgangsbereich und der Talbereich einen Teil des Bodenabschnitts. Der Bodenabschnitt ist im Eingangsbereich und/oder im Ausgangsbereich höher gelegen als im Talbereich. Insbesondere sind der Eingangsbereich und der Ausgangsbereich in einem eingelegten Zustand des Grundmoduls höher gelegen als der Führungsnutboden. Der Bodenabschnitt im Talbereich kann im Speziellen im eingelegten Zustand auf gleicher Höhe, bzw. wenige Millimeter höher angeordnet sein. Im Speziellen, beispielsweise bei Vorliegen einer Materialausnehmung oder eines Durchbruchs im Talbereich, kann der Führungsnutboden einen Teil des Bodens des Talbereichs bilden und/oder ergänzen.

Insbesondere ist es vorgesehen, dass die Senke symmetrisch ausgebildet ist, insbesondere ist die Senke zwischen Eingangsbereich und Ausgangsbereich, insbesondere im Talbereich, symmetrisch ausgebildet. Symmetrisch kann beispielsweise symmetrisch bezüglich eines Scheitelpunktes oder eines Minimums im Talbereich verstanden werden. Besonders bevorzugt wird als symmetrisch eine Achsensymmetrie bezüglich einer Mittelsenkrechten zwischen Eingangsbereich und Ausgangsbereich verstanden. Beispielsweise ist die Senke parabelförmig, dreiecksförmig, potenzialtopfförmig oder als Abschnitt eines Kreisbogens ausgebildet.

Eine Ausgestaltung der Erfindung sieht vor, dass das Grundmodul im Zwischenbereich und/oder im Talbereich, einen Durchbruch, eine Materialausnehmung, ein Loch oder Aussparung aufweist. Dabei ist es beispielsweise vorgesehen, dass im Bereich dieses Durchbruchs, der Materialausnehmung, des Lochs und/oder der Aussparung der Führungsnutboden einen Boden und/oder Abstützung für die aufgenommenen Räder und/oder Rollen bildet.

Besonders bevorzugt ist es, dass das Grundmodul, beispielsweise im Positionierungsabschnitt und/oder die zweite Führungsnut, eine Verjüngung zur Positionierung der Transporteinheit, im Speziellen der Räder und/oder der Rollen, aufweist. Die Verjüngung ist insbesondere eine Verjüngung in Querrichtung. Insbesondere ist die Verjüngung im Talbereich am engsten, wobei sich diese in Richtung des Einfahr- und Ausgangsbereich aufweitet.

Besonders bevorzugt ist es, dass das Grundmodul mindestens zwei Kopplungsschnittstellen aufweist. Die Kopplungsschnittstellen sind insbesondere zur reversiblen Kopplung mit einer Gegenschnittstelle ausgebildet. Die Kopplungsschnittstellen sind insbesondere in Längsrichtung beabstandet angeordnet, beispielsweise im Bereich des Eingangsbereichs und des Ausgangsbereichs. Die Kopplungsschnittstellen dienen insbesondere zur Kopplung der modularen Bestandteile der Positionierungsvorrichtung. Insbesondere sind die Kopplungsschnittstellen als Steckschnittstellen, Clipschnittstellen, formschlüssige Schnittstellen, mechanische und/oder elektromagnetische Schnittstellen ausgebildet.

Die Positionierungsvorrichtung umfasst mindestens ein Auffahrmodul. Das Auffahrmodul weist eine Gegenschnittstelle zur Verbindung und/oder Kopplung mit einer der Kopplungsschnittstellen auf. Insbesondere ist zur Verwendung der Positionierungsvorrichtung vorgesehen, dass die Gegenschnittstelle des Auffahrmoduls mit der Kopplungsschnittstelle im Eingangsbereich verbunden wird. Insbesondere kann das Auffahrmodul auch ein Abfahrmodul bilden, welches beispielsweise im Ausgangsbereich des Grundmoduls gekoppelt wird. Das Auffahrmodul umfasst eine Auffahrnut, insbesondere zur Aufnahme und/oder Führung des Rates und/oder der Rolle. Insbesondere bildet das Auffahrmodul einen Übergang der ersten Führungsnut zur zweiten Führungsnut. Das Abfahrmodul bildet insbesondere einen Übergang von zweiter Führungsnut zu erster Führungsnut. Das Auffahrmodul, insbesondere die Auffahrnut, umfasst einen Auffahrmodulbodenabschnitt, wobei der Auffahrmodulbodenabschnitt eine Steigung aufweist. Die Steigung des Auffahrmodulbodenabschnitts ist in Längsrichtung und/oder Fahrtrichtung ansteigend, mit anderen Worten von einem Nuteingang zu einem Nutausgang und/oder von erster Führungsnut zu zweiter Führungsnut ansteigend. Zur Verwendung als Abfahrmodul ist die Steigung in Fahrtrichtung bzw. Längsrichtung fallend ausgebildet, um von dem Höhenniveau im Ausgangsbereich zum Höhenniveau der ersten Führungsnut zu gelangen.

Eine Ausgestaltung der Erfindung sieht vor, dass die Positionierungsvorrichtung ein Abschlussmodul aufweist. Das Abschlussmodul ist zur Kopplung mit dem Grundmodul ausgebildet. Das Abschlussmodul weißt insbesondere eine Gegenschnittstelle auf. Das Abschlussmodul ist insbesondere ausgebildet, zu seiner Verwendung mit den Kopplungsschnittstellen des Grundmoduls im Ausgangsbereich gekoppelt zu werden. Das Abschlussmodul ist ausgebildet eine Abdeckung und/oder einen Abschluss für die zweite Führungsnut und/oder das Grundmodul zu bilden. Insbesondere kann das Abschlussmodul eine Abdeckung und/oder einen Abschluss für die Schiene der Transportanordnung bilden. Besonders bevorzugt bildet das Abschlussmodul einen Abschluss und eine Abdeckung für die Schiene, die erste Führungsnut, das Grundmodul und die zweite Führungsnut. Eine Ausgestaltung der Erfindung sieht vor, dass das Grundmodul eine Montageschnittstelle umfasst. Insbesondere kann das Grundmodul beispielsweise einen Seitenabschnitt, beispielsweise Flügelabschnitt, umfassen, wobei die Montageschnittstelle beispielsweise in diesem Bereich angeordnet ist. Die Montageschnittstelle ist zur Verbindung, zur Fixierung und/oder zur Arretierung des Grundmoduls in oder mit der Führungsschiene ausgebildet. Beispielsweise ist die Montageschnittstelle ausgebildet, ein Verschieben des Grundmoduls in Längsrichtung in der ersten Führungsnut bzw. relativ zur Schiene zu verhindern. Besonders bevorzugt umfasst die Montageschnittstelle eine Schraubverbindung und/oder eine Verbindung zur klemmschlüssigen Verbindung. Beispielsweise kann hierzu eine Schraube zur Verspannung von Grundmodul und Schiene eingesetzt sein.

Besonders bevorzugt ist es, dass das Grundmodul, das Auffahrmodul und/oder das Abschlussmodul aus einem Kunststoff, insbesondere Hartplastik, gebildet sind. Insbesondere sind Grundmodul, Auffahrmodul und/oder Abschlussmodul als Spritzgussteile ausgebildet.

Einen weiteren Gegenstand der Erfindung bildet eine Transportanordnung mit der Positionierungsvorrichtung. Die Transportanordnung umfasst die Schiene und die Transporteinheit. Die Positionierungsvorrichtung ist eingelegt und/oder angeordnet in der ersten Führungsnut der Schiene. Das Grundmodul ist zur Aufnahme der mindestens einen Rolle und/oder des mindestens einen Rades der Transporteinheit ausgebildet und/oder dient dem Fixieren, Positionieren der Transporteinheit.

Weitere Wirkungen, Ausgestaltungen und Vorteile ergeben sich aus den beigefügten Figuren und deren Beschreibung. Dabei zeigen:
Figur 1 ein Ausführungsbeispiel eine Positionierungsvorrichtung;
Figur 2 Ausschnitt einer Transportanordnung;

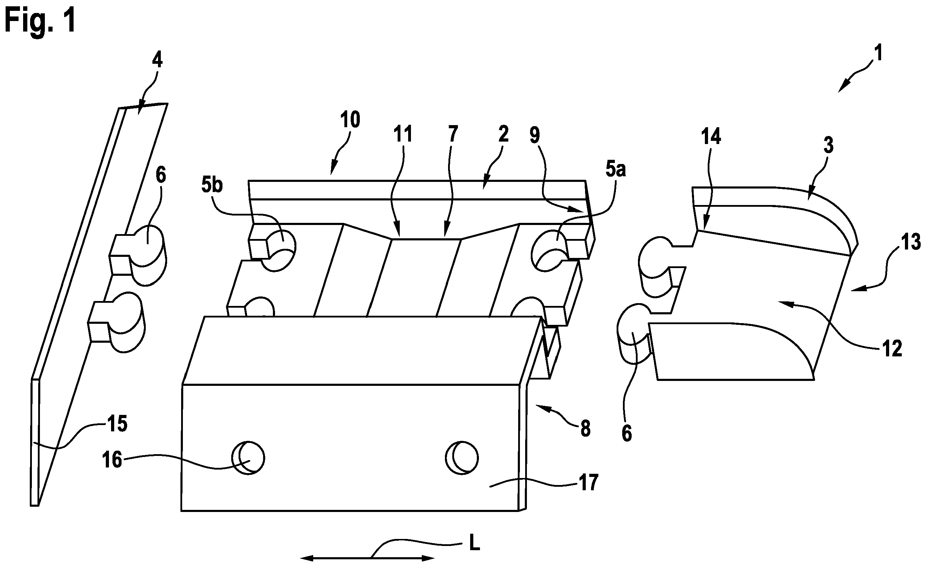

Figur 1 zeigt ein Ausführungsbeispiel einer Positionierungsvorrichtung 1 mit einem Grundmodul 2, einem Auffahrmodul 3 und einem Abschlussmodul 4. Die Positionierungsvorrichtung, insbesondere die Module 2, 3, 4 sind aus einem Kunststoff, einem Hartplastik, gebildet. Die Module 2, 3, 4 bilden ein modulares System. Die das Grundmodul 2 sieht hier zu zwei Kopplungsschnittstellen 5a und 5b vor, wobei diese verbindungsbar und/oder koppelbar sind mit einer Gegenkopplungsschnittstelle 6 des Auffahrmoduls 3 und einer Gegenkopplungsschnittstellen 6 des Abschlussmoduls 4.

Das Grundmodul 2 umfasst einen Positionierungsabschnitt 7, der eine zweite Führungsnut bildet und einen Schienenkopplungsabschnitt 8 zur Verbindung und/oder zum Einlegen in eine Schiene. Beispielsweise wird der Positionierungsabschnitt 7 als der konvexe und/oder innen liegende Bereich der Nut verstanden, wobei der Schienenkopplungsabschnitt 8 beispielsweise die äußere Hülle dieser Nut bildet. Das Grundmodul 2 weist eine Längserstreckung L auf, wobei gleichgerichtet hierzu die zweite Führungsnut verläuft. Das Grundmodul 2 und insbesondere der Positionierungsabschnitt 7 weisen einen Eingangsbereich 9 und einen Ausgangsbereich 10 auf, wobei zwischen diesen der Talbereich 11 angeordnet ist. Der Eingangsbereich 9 ist zum Talbereich 11 abfallend ausgebildet, wobei der Ausgangsbereich 10 vom Talbereich 11 weggerichtet ansteigend ausgebildet ist, so dass der Talbereich 11 eine Senke bildet, in der die Rollen und/oder das Rad der Transporteinheit gehalten und/oder fixiert werden können. Der Talbereich 7 umfasst insbesondere eine Aussparung, die zwischen den Bereichen 9 und 10 angeordnet ist.

Um das Rad und/oder die Rolle der Transporteinheit von einem Führungsnutboden der Schiene zum höher gelegenen Eingangsbereich 9 des Grundmoduls 2 zu bringen ist das Auffahrmodul 3 vorgesehen, dass einen Auffahrmodulbodenabschnitt 12, einen Nuteingang 13 und einen Nutausgang 14 umfasst. Das Auffahrmodul 3 ist ausgebildet, dass der Auffahrmodulbodenabschnitt 12 vom Nuteingang 13 zum Nutausgang 14 ansteigend verläuft, insbesondere das am Nutausgang 14 die Höhenlage und/oder Höhe des Eingangsbereichs 9 des Grundmoduls 2 erreicht wird.

Zum Abschluss des Grundmoduls 2 und/oder einer Schiene der Transportanordnung ist das Abschlussmodul 4 vorgesehen, das eine Abschlusswandung 15 umfasst, die bei Verbindung der Gegenschnittstelle 6 des Abschlussmoduls 4 mit den Kopplungsschnittstellen 5b die zweite Nut des Grundmoduls abschließt, insbesondere die erste Nut der Schiene und/oder die Schiene abschließt.

Ferner umfasst das Grundmodul 7 eine Montageschnittstelle 16. Die Montageschnittstelle 16 ist hierbei beispielsweise in einem Flügelabschnitt 17 des Grundmoduls angeordnet, wobei es in dieser Ausführung vorgesehen ist, dass durch Verwendung einer Verschraubung das Grundmodul 7 mit der Schiene verbunden und/oder verspannt wird.

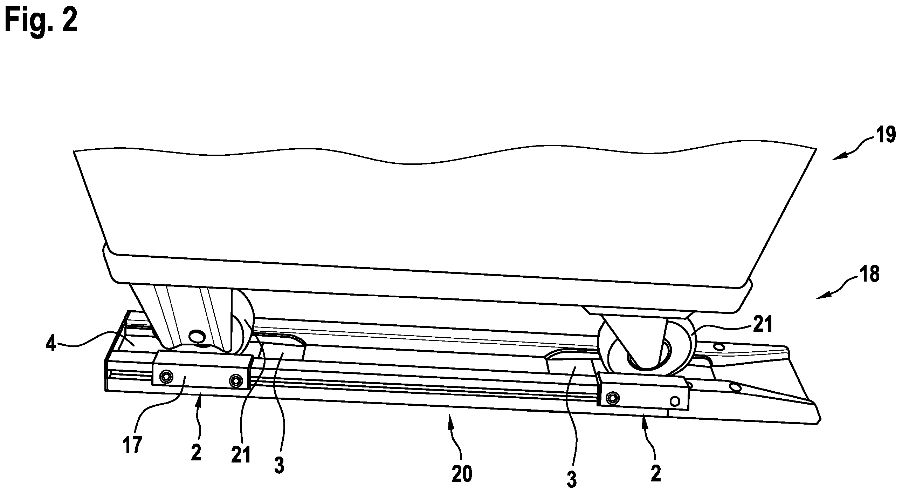

Figur 2 zeigt hierzu die Anordnung der Positionierungsvorrichtung 1 in einer Transportanordnung 18. Die Transportanordnung 18 umfasst die Transporteinheit 19 sowie die Schiene 20. Die Transporteinheit 19 umfasst Räder 21, die geführt in der Schiene 20 angeordnet sind. Um die Transporteinheit 19 an einer Position zu positionieren und/oder zu fixieren ist die Positionierungsvorrichtung 1 mit der Schiene 20 verbunden, insbesondere mittels der Montageschnittstelle 16, die eine Verschraubung von Grundmodul 1 und Schiene 20 bildet. Insbesondere ist zu sehen, dass das Abschlussmodul 4 die Schiene 20 abschließt. Insbesondere zeigt Figur 2, dass das Auffahrmodul 3 auch als Abfahrmodul 4 verwendbar ist.

## Patentansprüche

1. Positionierungsvorrichtung (1) für eine Transportanordnung (18),
wobei die Transportanordnung (18) mindestens eine Schiene (20) und eine Transporteinheit (19) mit mindestens einer Rolle und/oder mindestens einem Rad aufweist, wobei die Schiene (20) eine erste Führungsnut mit einem ersten Führungsnutboden aufweist, wobei zur Führung der Transporteinheit (19) die mindestens eine Rolle und/oder das mindestens eine Rad in der ersten Führungsnut angeordnet ist,
mit einem Grundmodul (2), wobei das Grundmodul (2) einen Positionierungsabschnitt (7) und einen Schienenkopplungsabschnitt (8) umfasst,
wobei der Schienenkopplungsabschnitt (8) zum Einlegen in die erste Führungsnut und/oder zum formschlüssigen Halten durch die erste Führungsnut ausgebildet ist,
**dadurch gekennzeichnet dass** der Positionerungsabschnitt (7) eine zweite Führungsnut und einen für das mindestens eine Rad und/oder die mindestens eine Rolle befahrbaren Bodenabschnitt aufweist, wobei der Bodenabschnitt eine Senke zur Positionierung und/oder Fixierung der Transporteinheit (19) aufweist, wobei die Führungsnut in eine Längsrichtung des Grundmoduls (2) durchgängig und/oder offen ausgebildet ist.

2. Positionierungsvorrichtung (1) nach Anspruch 1, **dadurch gekennzeichnet, dass** das Grundmodul (2) einen Eingangsbereich (9) und einen Ausgangsbereich (10) aufweist, wobei der Eingangsbereich (9) und der Ausgangsbereich (10) in Längsrichtung beabstandet sind und zwischen Eingangsbereich (9) und Ausgangsbereich (10) ein Talbereich (11) angeordnet ist, wobei der Bodenabschnitt im Eingangsbereich (9) und/oder Ausgangsbereich (10) höher gelegen ist als im Talbereich (11).

3. Positionierungsvorrichtung (1) nach Anspruch 2, **dadurch gekennzeichnet, dass** die Senke zwischen Eingangsbereich (9) und Ausgangsbereich (10) symmetrisch bezüglich des Talbereichs (11) ausgebildet ist.

4. Positionierungsvorrichtung (1) nach Anspruch 2 oder 3, **dadurch gekennzeichnet, dass** das in einem eingelegten Zustand des Grundmoduls (2) in die Führungsschiene der Bodenabschnitt im Talbereich (11) in gleicher Höhe wie der erste Führungsnutboden angeordnet ist.

5. Positionierungsvorrichtung (1) nach einem der Ansprüche 2 bis 4, **dadurch gekennzeichnet, dass** das Grundmodul (2) im Zwischenbereich einen Durchbruch und/oder eine Materialausnehmung bildet.

6. Positionierungsvorrichtung (1) nach einem der vorherigen Ansprüche, **dadurch gekennzeichnet, dass** die zweite Führungsnut eine Verjüngung zur Positionierung der Transporteinheit (19) in eine Querrichtung aufweist.

7. Positionierungsvorrichtung (1) nach einem der vorherigen Ansprüche, **dadurch gekennzeichnet, dass** das Grundmodul (2) zwei Kopplungsschnittstellen (5a,b) aufweist, wobei die Kopplungsschnittstellen (5a,b) in Längsrichtung beabstandet angeordnet sind.

8. Positionierungsvorrichtung (1) nach Anspruch 7, **gekennzeichnet durch** ein Auffahrmodul (3), wobei das Auffahrmodul (3) eine Gegenschnittstelle zur Verbindung mit einer der Kopplungsschnittstellen (5a,b), wobei das Auffahrmodul (3) eine Auffahrnut mit einem Auffahrmodulbodenabschnitt (12) aufweist, wobei der Auffahrmodulbodenabschnitt (12) von einem Nuteingang (13) zu einem Nutausgang (14) ansteigend ausgebildet ist.

9. Positionierungsvorrichtung (1) nach Anspruch 7 oder 8, **gekennzeichnet durch** ein Abschlussmodul (4), wobei das Abschlussmodul (4) eine Gegenschnittstelle zur Verbindung mit einer der Kopplungsschnittstellen (5a,b) aufweist, wobei das Abschlussmodul (4) in Verbindung mit der Kopplungsschnittstelle (5a,b) einen Abschluss und/oder eine Abdeckung für die zweite Führungsnut bildet.

10. Positionierungsvorrichtung (1) nach einem der Ansprüche 7 bis 9, **dadurch gekennzeichnet, dass** die Kopplungsschnittstelle (5a,b) als eine Clip-, eine Verrastungs- und/oder Hakenschnittstelle ausgebildet ist.

11. Positionierungsvorrichtung (1) nach einem der vorherigen Ansprüche, **dadurch gekennzeichnet, dass** das Grundmodul (2) eine Montageschnittstelle (16) zur Verbindung, Arretierung und/oder Fixierung des Grundmoduls (2) und der Führungsschiene aufweist.

12. Positionierungsvorrichtung (1) nach Anspruch 11, **dadurch gekennzeichnet, dass** die Montageschnittstelle (16) zur Schraubverbindung und/oder klemmschlüssigen Verbindung ausgebildet ist.

13. Positionierungsvorrichtung (1) nach einem der vorherigen Ansprüche, **dadurch gekennzeichnet, dass** das Grundmodul (2), das Auffahrmodul (3) und/oder das Abschlussmodul (4) aus einem Kunststoff gebildet sind.

14. Transportanordnung (18) mit der Positionierungsvorrichtung (1) nach einem der vorherigen Ansprüche, mit einer Schiene (20) und einer Transporteinheit (19), wobei die Positionierungsvorrichtung (1) eingelegt und/oder angeordnet ist in einer ersten Führungsnut der Schiene (20), wobei das Grundmodul (2) zur Aufnahme der mindestens einen Rolle und/oder des mindestens einen Rades der Transporteinheit (19) ausgebildet ist.

## Claims

1. Positioning device (1) for a transportation assembly (18),
wherein the transportation assembly (18) has at least one rail (20) and a transportation unit (19) having at least one roller and/or at least one wheel, wherein the rail (20) has a first guide groove having a first guide groove base, wherein for guiding the transportation unit (19) the at least one roller and/or the at least one wheel is disposed in the first guide groove,
having a main module (2), wherein the main module (2) comprises a positioning portion (7) and a rail coupling portion (8),
wherein the rail coupling portion (8) is designed for insertion into the first guide groove and/or for being held in a form-fitting manner by the first guide groove,
**characterized in that** the positioning portion (7) has a second guide groove and a base portion which is able to be travelled on by the at least one wheel and/or the at least one roller, wherein the base portion has a depression for positioning and/or fixing the transportation unit (19), wherein the guide groove is designed to be continuous and/or open in a longitudinal direction of the main module (2).

2. Positioning device (1) according to Claim 1, **characterized in that** the main module (2) has an entry region (9) and an exit region (10), wherein the entry region (9) and the exit region (10) are spaced apart in the longitudinal direction, and a valley region (11) is disposed between the entry region (9) and the exit region (10), wherein the base portion in the entry region (9) and/or the exit region (10) is at a higher level than in the valley region (11).

3. Positioning device (1) according to Claim 2, **characterized in that** the depression between the entry region (9) and the exit region (10) is formed symmetrically with respect to the valley region (11).

4. Positioning device (1) according to Claim 2 or 3, **characterized in that** in an inserted state of the main module (2) in the guide rail, the base portion in the valley region (11) is disposed at the same height level as the first guide groove base.

5. Positioning device (1) according to one of Claims 2 to 4, **characterized in that** the main module (2) in the intermediate region forms a breakthrough and/or a material clearance.

6. Positioning device (1) according to one of the preceding claims, **characterized in that** the second guide groove has a taper for positioning the transportation unit (19) in a transverse direction.

7. Positioning device (1) according to one of the preceding claims, **characterized in that** the main module (2) has two coupling interfaces (5a,b), wherein the coupling interfaces (5a,b) are disposed so as to be spaced apart in the longitudinal direction.

8. Positioning device (1) according to Claim 7, **characterized by** a ramp module (3), wherein the ramp module (3) has a mating interface for connecting to one of the coupling interfaces (5a,b), wherein the ramp module (3) has a ramp groove having a ramp module base portion (12), wherein the ramp module base portion (12) is designed so as to ascend from a groove entry (13) to a groove exit (14).

9. Positioning device (1) according to Claim 7 or 8, **characterized by** an end module (4), wherein the end module (4) has a mating interface for connecting to one of the coupling interfaces (5a,b), wherein the end module (4) in conjunction with the coupling interface (5a,b) forms an end and/or a cover for the second guide groove.

10. Positioning device (1) according to one of Claims 7 to 9, **characterized in that** the coupling interface (5a,b) is formed as a clip, a latching and/or hook interface.

11. Positioning device (1) according to one of the preceding claims, **characterized in that** the main module (2) has an assembly interface (16) for connecting, locking and/or fixing the main module (2) and the guide rail.

12. Positioning device (1) according to Claim 11, **characterized in that** the assembly interface (16) is designed for a threaded connection and/or a clamped connection.

13. Positioning device (1) according to one of the preceding claims, **characterized in that** the main module (2), the ramp module (3) and/or the end module (4) are formed from a plastics material.

14. Transportation assembly (18) having the positioning device (1) according to one of the preceding claims, having a rail (20) and a transportation unit (19), wherein the positioning device (1) is inserted into and/or disposed in a first guide groove of the rail (20), wherein the main module (2) is designed for receiving the at least one roller and/or the at least one wheel of the transportation unit (19).

## Revendications

1. Dispositif de positionnement (1) pour un agencement de transport (18),
l'agencement de transport (18) présentant au moins un rail (20) et une unité de transport (19) avec au moins un galet et/ou au moins une roue, le rail (20) présentant une première rainure de guidage avec un premier fond de rainure de guidage, l'au moins un galet et/ou l'au moins une roue étant agencé dans la première rainure de guidage pour le guidage de l'unité de transport (19),
avec un module de base (2), le module de base (2) comprenant une section de positionnement (7) et une section de couplage de rail (8),
la section de couplage de rail (8) étant réalisée pour être insérée dans la première rainure de guidage et/ou pour être maintenue par complémentarité de forme par la première rainure de guidage,
**caractérisé en ce que** la section de positionnement (7) présente une deuxième rainure de guidage et une section de fond praticable pour l'au moins une roue et/ou l'au moins un galet, la section de fond présentant un creux pour le positionnement et/ou la fixation de l'unité de transport (19), la rainure de guidage étant réalisée de manière continue et/ou ouverte dans une direction longitudinale du module de base (2).

2. Dispositif de positionnement (1) selon la revendication 1, **caractérisé en ce que** le module de base (2) présente une zone d'entrée (9) et une zone de sortie (10), la zone d'entrée (9) et la zone de sortie (10) étant espacées dans la direction longitudinale et une zone de vallée (11) étant agencée entre la zone d'entrée (9) et la zone de sortie (10), la section de fond dans la zone d'entrée (9) et/ou la zone de sortie (10) étant située plus haut que dans la zone de vallée (11).

3. Dispositif de positionnement (1) selon la revendication 2, **caractérisé en ce que** le creux entre la zone d'entrée (9) et la zone de sortie (10) est réalisé symétriquement par rapport à la zone de vallée (11).

4. Dispositif de positionnement (1) selon la revendication 2 ou 3, **caractérisé en ce que**, dans un état inséré du module de base (2) dans le rail de guidage, la section de fond dans la zone de vallée (11) est agencée à la même hauteur que le premier fond de rainure de guidage.

5. Dispositif de positionnement (1) selon l'une quelconque des revendications 2 à 4, **caractérisé en ce que** le module de base (2) forme une percée et/ou un évidement de matière dans la zone intermédiaire.

6. Dispositif de positionnement (1) selon l'une quelconque des revendications précédentes, **caractérisé en ce que** la deuxième rainure de guidage présente un rétrécissement pour le positionnement de l'unité de transport (19) dans une direction transversale.

7. Dispositif de positionnement (1) selon l'une quelconque des revendications précédentes, **caractérisé en ce que** le module de base (2) présente deux interfaces de couplage (5a, b), les interfaces de couplage (5a, b) étant agencées espacées dans la direction longitudinale.

8. Dispositif de positionnement (1) selon la revendication 7, **caractérisé par** un module d'accès (3), le module d'accès (3) présentant une contre-interface pour la liaison avec l'une des interfaces de couplage (5a, b), le module d'accès (3) présentant une rainure d'accès avec une section de fond de module d'accès (12), la section de fond de module d'accès (12) étant réalisée en montant d'une entrée de rainure (13) à une sortie de rainure (14).

9. Dispositif de positionnement (1) selon la revendication 7 ou 8, **caractérisé par** un module de fermeture (4), le module de fermeture (4) présentant une contre-interface pour la liaison avec l'une des interfaces de couplage (5a, b), le module de fermeture (4) formant, en liaison avec l'interface de couplage (5a, b), une fermeture et/ou un couvercle pour la deuxième rainure de guidage.

10. Dispositif de positionnement (1) selon l'une quelconque des revendications 7 à 9, **caractérisé en ce que** l'interface de couplage (5a, b) est réalisée sous la forme d'une interface à clip, d'une interface à encliquetage et/ou d'une interface à crochet.

11. Dispositif de positionnement (1) selon l'une quelconque des revendications précédentes, **caractérisé en ce que** le module de base (2) présente une interface de montage (16) pour relier, bloquer et/ou fixer le module de base (2) et le rail de guidage.

12. Dispositif de positionnement (1) selon la revendication 11, **caractérisé en ce que** l'interface de montage (16) est réalisée pour une liaison par vissage et/ou une liaison par serrage.

13. Dispositif de positionnement (1) selon l'une quelconque des revendications précédentes, **caractérisé en ce que** le module de base (2), le module d'accès (3) et/ou le module de fermeture (4) sont formés d'une matière plastique.

14. Agencement de transport (18) avec le dispositif de positionnement (1) selon l'une quelconque des revendications précédentes, avec un rail (20) et une unité de transport (19), le dispositif de positionnement (1) étant inséré et/ou agencé dans une première rainure de guidage du rail (20), le module de base (2) étant réalisé pour recevoir l'au moins un galet et/ou l'au moins une roue de l'unité de transport (19).
